# EUROPEAN PATENT APPLICATION

(11) **EP 4 568 230 A1**
(43) Date of publication of application: **11.06.2025**
(21) Application number: 23215103.5
(22) Date of filing: 07.12.2023
(51) Int. Cl.: H04L 67/12

(54) **ENERGY RESILIENCY WITHIN EDGE COMPUTING INTEGRATING RENEWABLE ENERGY SOURCES AND ADVANCED ENERGY MANAGEMENT TECHNIQUES**

(71) Applicant: Competence Center I4byDesign Private Company, 57001 Thessaloniki (GR)
(72) Inventor: TZOVARAS, DIMITRIOS, 57001 THESSALONIKI (GR); IOANNIDIS, DIMOSTHENIS, 57001 THESSALONIKI (GR); SOUGLES, CHRISTOS, 57001 THESSALONIKI (GR); KOUZINOPOULOS, CHARALAMPOS, 57001 THESSALONIKI (GR); IAKOVOU, PETROS, 57001 THESSALONIKI (GR); TSITOURIDIS, IOANNIS, 57001 THESSALONIKI (GR)
(74) Representative: Perivolaris, Georgios

(57) **Abstract**

The invention concerns a smart, energy autonomous, distributed embedded system that can learn, monitor, represent and model industrial and operational applications as well as execute at the edge lightweight cognitive digital twins. The system can be used especially in challenging environments, including remote hazardous chemical storage facilities. More specifically, the system consists of a distributed network of embedded devices, configured as OPC UA clients and OPC UA servers. The OPC UA servers monitor the infrastructure of chemical storage tanks, collect data and transmit them remotely to OPC UA clients. The OPC UA clients execute lightweight cognitive digital twins that enables learning, representing and modelling the infrastructure to ensure the safe and efficient storage of chemicals. The embedded devices of the distributed system are autonomous, through the use of units for the harvest, storage and distribution of energy.

## Description

### Technical field of the invention

The present invention relates to a smart, energy autonomous, distributed embedded system that can learn, monitor, represent and model industrial and operational applications as well as execute at the edge lightweight cognitive digital twins. The system can be used especially in challenging environments, including remote hazardous chemical storage facilities. More specifically, the system consists of a distributed network of embedded devices, configured as OPC UA (Open Platform Communications Unified Architecture) clients and OPC UA servers. The OPC UA servers monitor the infrastructure of chemical storage tanks, collect data and transmit them remotely to OPC UA clients. The OPC UA clients execute lightweight cognitive digital twins that, with the use of the collected data from the OPC UA servers, enables learning, representing and modelling the infrastructure to ensure the safe and efficient storage of chemicals. The embedded devices of the distributed system are autonomous, through the use of units for the harvest, storage and distribution of energy.

### State of the art

At today's technical level, the OPC UA Foundation itself heralds that OPC UA finds fertile ground in the chemical industry, as it is even more demanding in chemicals and gas where communication with a huge base of legacy, mission-critical systems must be maintained.

Patent US20170060574A1 outlines a method for smart processing of sensor data at the edge, incorporating automatic discovery of patterns, intelligent service composition, resource optimization, and health monitoring in a software layer connected to local networks on gateway devices or embedded systems. However, the system is not based on the OPC UA, enabling the operation of a distributed network, as in the present patent.

Patent US11477083B2 presents an industrial internet-connected control system with a local embedded control device, featuring multiple independent processing units for parallel execution of real-time and cloud-connected processes, including a secure field agent for gateway communication and updates. The system integrates a cloud-based application for managing control applications, updates, and upgrades, with the apparatus comprising multiple network interfaces and processors operating under different operating systems, including OPC UA. Yet, the apparatus described is not energy autonomous, as in the presented patent.

Patent CN114154925A outlines a digital twin warehouse method using OPC UA, where data from monitoring devices is transmitted to an OPC UA server, coded, and stored in a database. This OPC UA-based approach addresses challenges in equipment control and communication, offering an efficient solution for improved monitoring in warehouse logistics. However, this solution cannot be generalized for universal use in the concept of embedded systems within remote hazardous chemical storage facilities, in contrast with the solution being proposed in the current patent.

In addition, there are numerous commercial solutions for industrial (PLC-oriented) or non-industrial hardware supporting OPC UA, but none of them is designed to work autonomously in terms of power and network.

### Summary presentation of the invention

The invention concerns a distributed embedded system consisting of sensors that monitor industrial machines and equipment as well as embedded devices that can learn, monitor, represent and model industrial and operational applications.

The system combines photovoltaic panels with an energy storage device and a power management rendering it energetically autonomous.

The system is run using an OPC UA (Open Platform Communications Unified Architecture).

The system executes cognitive digital twins of the monitoring machines.

The system is used in remote hazardous chemical facilities, in order to monitor their operating conditions.

Concluding the basic characteristics of the inventions, it concerns a distributed embedded system consisted of, at least, one temperature sensor, one leakage sensor, one distance sensor, one pressure sensor, one humidity sensor, characterized in that it is used to monitor machines and equipment of remote hazardous chemical storage facilities and to feed this information in lightweight cognitive digital twins executed at the edge, through the use of PLCs.

The system devices include energy harvesting units, energy storage units and PMICs, that render them autonomous in terms of energy requirements.

The system is run using an Open Platform Communications Unified Architecture OPC UA.

A system device executes lightweight cognitive digital twins.

### Advantages of the invention

The advantages of this invention are the following:
A) It allows the execution of lightweight cognitive digital twins on embedded devices.
B) The lightweight cognitive digital twins can be executed autonomously through the harvesting of ambient energy by the energy harvesting unit, the storage of excessive energy to the energy storage unit and the circulation of energy to the components of the system through a PMIC.
C) The lightweight cognitive digital twins can feed data collected by remote sensors from machines and equipment through OPC UA.
D) The remote sensors can collect data from machines and equipment of remote hazardous chemical storage facilities without an intervention by human operators.

### Disclosure of the invention

Hazardous chemicals, which can include flammable, toxic, corrosive, or otherwise dangerous substances, and can be in a liquid, aerial or solid state. They are often stored and handled in storage sites located in areas that are distant from populated areas or urban centers. The equipment of such sites, including tanks, pipes and pumps, must be continuously monitored to ensure the safe and efficient storage of chemicals. However, remote areas often lack sufficient access to utilities, including electricity and wired network. Often, human operators have to check the status of such equipment manually, posing risks for their safety.

When the status of the equipment is sensed through the use of sensors, often different types of sensors are employed, including temperature sensors, leakage sensors, distance sensors, pressure sensors, humidity sensors and others.

In the case of automatic sensing of the equipment status, the existing sensing infrastructure of industrial sites for the storage of chemicals often includes multiple, complex and incompatible protocols and methods for data communication.

The OPC Unified Architecture on the other hand is an open standard for data exchange from sensors to remote servers. It is often used in the context of Industry 4.0 and the Internet of Things (IoT). It is a communication protocol for industrial machines and includes a set of standards for connecting, controlling, and managing industrial devices and systems. OPC UA allows different devices and applications in industrial settings to exchange data and information. It's designed to meet modern industrial needs like security, reliability, flexibility, and interoperability.

An OPC UA server is at the core of the OPC UA architecture. It is a process that allows for the standardized access of sensors' data, deployed in or around industrial equipment. Such sensors are often connected to Programmable Logic Controllers (PLCs), industrial computers that can control industrial processes such as chemical storage tanks, hydraulic pumps, pressure valves and other equipment.

An OPC UA client is a process that allows for the efficient and secure communication with one or more OPC UA servers. Their primary role is to initiate and manage secure communication sessions with OPC UA servers, allowing them to read, write, and monitor data within a system. OPC UA clients can retrieve real-time data updates and historical data from the OPC UA servers for analysis and interaction with complex data structures.

Furthermore, OPC UA clients support various communication profiles, ensuring compatibility with different devices and protocols. They provide a standardized interface for accessing information from OPC UA servers, abstracting the underlying complexities and allowing for interoperability in heterogeneous industrial environments.

Data from the OPC UA servers can be used to feed a digital twin of the industrial system. A digital twin is a virtual representation of the system, allowing for its real-time monitoring, analysis, and simulation.

A category of digital twins are cognitive digital twins, meaning digital twins with cognitive computing features, that gain the ability to interpret, learn and make intelligent decisions based on collected data. Key characteristics of a cognitive digital twin include their adaptation to evolving environment and operational conditions, the decision making and their predictive capabilities through leveraging historical data.

Lightweight cognitive digital twins are cognitive digital twins that utilize minimum computing resources and thus can be executed at the edge. At the edge refers to miniaturized, energy-efficient, smart embedded systems that can execute complex methods.

The problem that the present invention solves is that digital twins and specifically cognitive digital twins are often executed on resource-intensive central computers that are often located in fixed positions and not at the edge. The central computers must be powered through their connection to existing power lines. Moreover, human operators are often tasked with collecting data manually for the cognitive digital twins.

The technical solution that this invention presents is the design and development of a smart, energy autonomous, distributed embedded system that can monitor industrial and operational applications, in the context of remote hazardous chemical storage facilities, and execute lightweight cognitive digital twins at the edge. The monitoring, representation and modelling of these applications allow for their safety enhancement, even without a physical presence of human operators, the predictive maintenance of the facilities, the testing and optimization of operational parameters, the efficient resource optimization as well as the continuous performance monitoring, ensuring that the facility operates within specified parameters.

Energy autonomy in embedded systems can be achieved through a combination of energy harvesting units, energy storage units and a Power Management Integrated Circuit (PMIC) as well as with the use of advanced energy management techniques.

The energy harvesting unit may consist of photovoltaic panels, thermoelectric generators, piezoelectric generators, or similar methods.

Energy storage units are used to store excessive energy generated by the energy harvesting unit, up to their storage capacity. These can include batteries, capacitors, supercapacitors and others methods.

A PMIC is used to regulate the power supply voltage at different levels based on the needs of individual components of the system, often using DC-DC converters or LDO regulators, ensuring stable and efficient power delivery while minimizing noise levels.

Additionally, PMICs interact with the energy storage unit and manage its charging, discharging, and protection by monitoring critical parameters such as voltage and current levels, temperature, and state of charge. This way, they achieve safe and efficient charging, protecting the energy storage unit from overcharging, over-discharging, and overheating.

Finally, PMICs regulate and manage the power generated by the energy harvesting unit installed in the system, optimizing it for either storage or immediate use.

### Description of the drawings

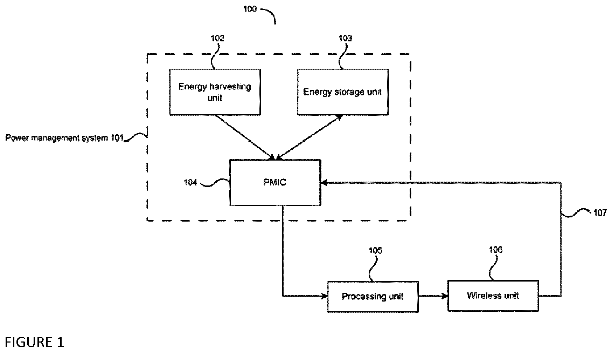

Figure 1 depicts the arrangement 100 of the embedded device that can be used autonomously as an OPC UA client or an OPC UA server. The arrangement 100 includes a power management system 101, which consists of an energy collection unit 102, an energy storage unit 103, and a PMIC 104. Additionally, it comprises a processing unit 105 and wireless unit 106. The processing unit 105 and wireless unit 106 are electrically connected with each other and the PMIC 104 through a power rail 107 through which they are powered.

The energy collection unit 102 comprises various electrical and electromechanical devices for energy collection. Each of the devices is arranged in such a way that it can produce electrical energy from different sources, including solar energy using photovoltaic elements, mechanical energy (e.g., through vibrations or acoustic waves), and radiofrequency energy conversion.

The energy storage unit 103 is used to store the energy produced by the energy collection unit 102. The stored energy can be used to power the processing unit 105 and wireless unit 106 through the PMIC 104 and the power rail 107. The energy storage unit 103 can be implemented using various technologies, such as capacitors, supercapacitors, or batteries of different technologies, including thin-film or solid-state batteries.

The PMIC 104 manages the charging, discharging, and protection of the energy storage unit 103. The energy from the energy storage unit 103 is directed through the PMIC to the power rail 107.

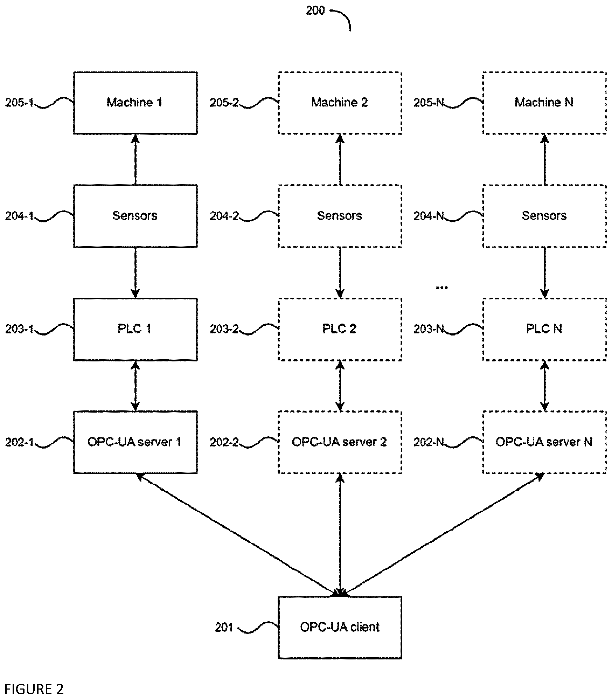

Figure 2 depicts a configuration of the smart, energy autonomous, distributed embedded system 200 for the monitoring of chemical processing industries and the execution at the edge of lightweight cognitive digital twins.

The distributed system 200 consists of an OPC-UA client 201 that can execute lightweight cognitive digital twins at the edge through the use of its processing unit 105 and feed them with data received via its wireless unit 106 from one or more OPC-UA servers 202-1 to 202-N.

The distributed system 200 additionally consists of one or more OPC-UA servers 202-1 to 202-N. These interface with one or more PLC 203-1 to 203-N and can send data from each PLC 203-1 to 203-N to the OPC-UA client 201 via its wireless unit 106 or can send commands from the OPC-UA client 201 to the PLC 203-1 to 203-N.

Each PLC 203-1 to 203-N can read data from sensors 204-1 to 204-N that are installed in or at different machines 205-1 to 205-N of chemical processing industries.

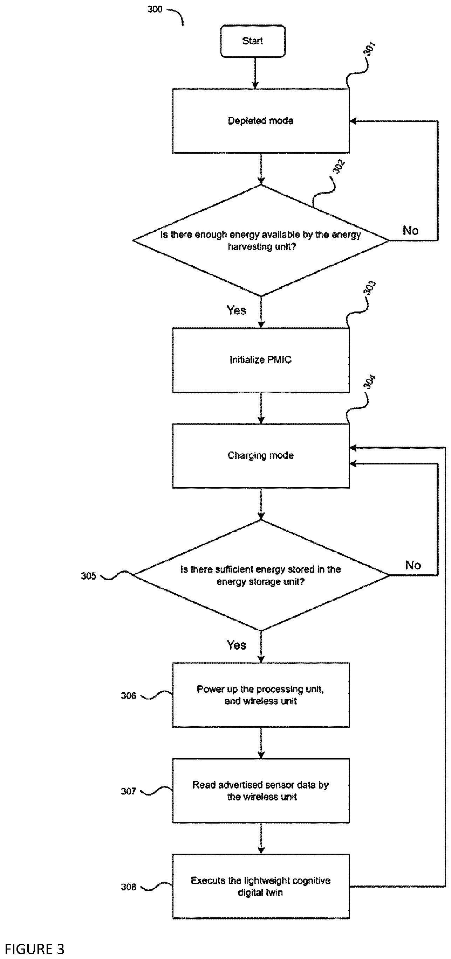

Figure 3 depicts a flowchart describing a method (300) for advanced energy management and execution of cognitive digital twins in an OPC-UA client (201).

The method (300) initially starts in a depleted state (301). In this state, no energy is available in both the energy harvesting unit (102) and the energy storage unit (103).

In the depleted state (301), there is a continuous check (302) for the presence of available energy from the energy harvesting unit (102).

When there is available energy by the energy harvesting unit (102), and the available voltage in the energy storage unit (103) is lower than a predetermined threshold, the PMIC (104) is activated (303), and the system transitions to the charging mode (304). In the charging mode (304), the energy harvesting unit (102) charges the energy storage unit (103).

In the charging mode (304), there is an ongoing check (305) for the presence of available energy in the energy storage unit (103), above the predetermined limit.

When the available voltage in the energy storage unit (103) exceeds the predetermined limit, the processing unit (105) and wireless unit (106) are activated (306).

Then, the wireless unit (106) reads data advertised by one or more OPC-UA servers (202-1 to 202-N).

The data are then fed to the lightweight cognitive digital twin model, executed by the processing unit (105) of the OPC-UA client (201).

The method (300) then transitions back to the charging mode (304).

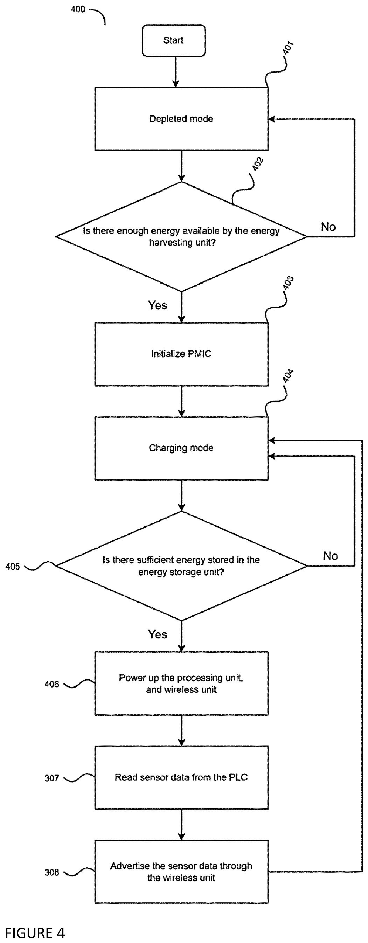

Figure 4 depicts a flowchart describing a method (400) for advanced energy management and execution of cognitive digital twins in OPC-UA servers (202-1 to 202-N).

The method (400) initially starts in a depleted state (401). In this state, no energy is available in both the energy harvesting unit (102) and the energy storage unit (103).

In the depleted state (401), there is a continuous check (402) for the presence of available energy from the energy harvesting unit (102).

When there is available energy by the energy harvesting unit (102), and the available voltage in the energy storage unit (103) is lower than a predetermined threshold, the PMIC (104) is activated (403), and the system transitions to the charging mode (404). In the charging mode (404), the energy harvesting unit (102) charges the energy storage unit (103).

In the charging mode (404), there is an ongoing check (405) for the presence of available energy in the energy storage unit (103), above a predetermined limit.

When the available voltage in the energy storage unit (103) exceeds the predetermined limit, the processing unit (105) and wireless unit (106) are activated (406).

Then, the wireless unit (106) reads data by one or more PLC (203-1 to 203-N).

The data are acquired from the sensors (204-1 to 204-N) from one or more machines (205-1 to 205-n).

The data are then transmitted to the OPC-UA client (201) via the wireless unit (106).

The method (300) then transitions back to the charging mode (304).

## Claims

1. A distributed embedded system consisted of sensors, **characterized in that** it is used to monitor machines and equipment of remote hazardous chemical storage facilities and to feed this information in lightweight cognitive digital twins executed at the edge, through the use of PLCs.

2. A distributed embedded system, as described in claim 1, wherein the sensors are, at least, one temperature sensor, one leakage sensor, one distance sensor, one pressure sensor, one humidity sensor.

3. A distributed embedded system, as described in the previous claims, wherein the system devices include energy harvesting units, energy storage units and PMICs, that render them autonomous in terms of energy requirements.

4. A distributed embedded system, as described in the previous claims, wherein the system is run using an Open Platform Communications Unified Architecture OPC UA.

5. A distributed embedded system, as described in the previous claims, wherein a system device executes lightweight cognitive digital twins.
